**Europäisches Patentamt**

**European Patent Office**

**Office européen des brevets**

(19)

(11) **EP 1 582 796 A2**

(12) **EUROPEAN PATENT APPLICATION**

(43) Date of publication:
**05.10.2005 Bulletin 2005/40**

(51) Int Cl.[7]: **F16L 9/12**, F16L 11/15,
F16L 11/20

(21) Application number: **05252081.4**

(22) Date of filing: **01.04.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **02.04.2004 GB 0407564**

(71) Applicant: **Uponor Innovation AB
513 81 Fristad (SE)**

(72) Inventors:
• **Bowman, Jeremy Archibald
Derbyshire S40 m3NA (GB)**
• **Richards, Lawrence Adam Faulkner
CV 34 5RY (GB)**
• **Wood, Steven Robert
Nottingham, NG 15 0AY (GB)**
• **Hunter, Mark Anthony
Tyne and Wear (GB)**

(74) Representative: **Hall, Robert Leonard
Harrison Goddard Foote
Fountain Precinct
Balm Green
Sheffield S1 2JA (GB)**

(54) **Plastics pipe**

(57) A jetting resistant and impact resistant plastics pipe comprises:

a) an inner pipe wall comprising a glass fibre filled semi-crystalline first polypropylene matrix polymeric material

b) a ribbed or corrugated outer pipe wall comprising a second polypropylene polymeric material

Figure 2

**Description**

This invention relates to plastics pipes, and more particularly to plastics pipes that are water jetting resistant and impact resistant. Such pipes find particular application for use in sewage systems.

Water jetting is a common procedure for clearing blockages and cleaning of pipes in sewage systems. The UK industry standard for structured wall sewer pipes (WIS 04-35-01) requires the pipes to sustain a water jet impact on the bore for two minutes at a pressure of 180 bar (2600 psig) without penetration (clause 6.10). However, contractors in practice are increasingly using higher pressures, for example, up to and including 273 bar (4000 psig) in the UK, and many plastics materials fail to meet this requirement. As a result, the plastics pipe manufacturing industry has resorted to complex solutions, for example, as described in GB2306609. This specification proposes a multilayer pipe structure, comprising up to five layers or more, wherein at least one layer is formed from PVC, and the total wall thickness of the pipe can be as much as 8mm. As described, the PVC layer is typically formed from uPVC comprising a very high level of filler. The specification also describes further structures which are not PVC based, but which comprise layers of filled ABS or polyolefins. Despite the claims of GB2306609, however, we have found in practice that pipes comprising conventional PVC, ABS or polyolefin layers do not meet the industry requirements for jetting resistance at economic pipe wall thicknesses. The complicated multilayer structures proposed in GB2306609 also add substantially to the equipment complexity and costs of manufacturing the sewer pipe. GB2306609 does not address the impact strength of polyolefin pipes, although a further requirement for sewer pipes is high external impact resistance. For example, the external impact test (clause 6.14) in WIS 04-35-01 for a 150/170 mm diameter structured wall pipe requires a weight of 7.5 kg to be dropped onto the pipe from a height of 1 m at 0°C without sustaining a fracture. This test is extremely difficult for certain polyolefin pipes to meet unless the wall thickness is increased to an unacceptable extent.

The problem is more clearly illustrated in Table 1 below, which gives the results of series of tests on glass fibre filled polypropylene polymeric materials.

In these tests, four prospective pipe grade polypropylene polymeric materials were selected and made up into pipes by extrusion. The pipes were subjected to a water jetting test (4000 psi, 273 bars) and an impact test, in accordance with WIS 04-35-01. The results are given in Table 1.

TABLE 1

| Polypropylene | glass fibre content % | Pipe Ø (mm) | Jetting Test | | Impact Test | |
|---|---|---|---|---|---|---|
| | | | Result | %4000psi Requirement | Result | % Requirement |
| 1 | 0 | 225 | FAIL | 5.4 | PASS | >200 |
| 2 | 15 | 170 | FAIL | 16.6 | PASS | 125 |
| 3 | 20 | 225 | PASS | >100 | FAIL | 94 |
| 4 | 30 | 225 | PASS | >114 | FAIL | <30 |

The results of Table 1 illustrate the difficulty of achieving the twin requirements of good jetting performance and high impact strength. Increasing the glass fibre content of the polypropylene polymeric material increases its stiffness and improves the jetting performance but unacceptably lowers impact strength.

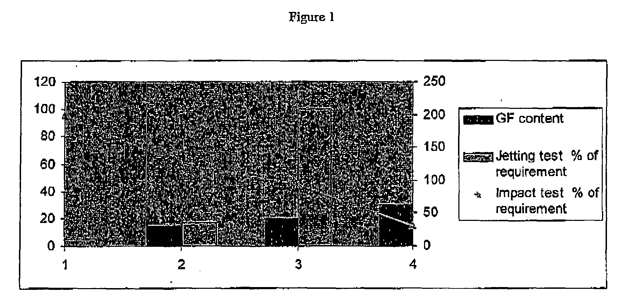

This effect is also illustrated graphically in Figure 1 of the accompanying Drawings.

Whilst plastics pipes have many advantages over traditional earthenware pipes in sewer applications, their inability to meet simultaneously the higher jetting resistance and impact resistance requirements is a potential inhibiting factor in the changeover to plastics pipes.

The present invention provides a plastics pipe formed from polypropylene polymeric material that can meet the new, more stringent requirements of the water industry.

According to the present invention there is provided a jetting resistant and impact resistant plastics pipe comprising:

    a) an inner pipe wall comprising a glass fibre filled semi-crystalline first polypropylene polymeric matrix material, comprising from 10 to 35% by weight glass fibres of average fibre length from 100 to 3000 μm, the first polypropylene polymeric matrix material having a degree of crystallinity of greater than 40%, and an MFR (230°C, 2.16 kg) of up to 5 g/10 min, and the filled polymeric material having an impact strength of from 800 to 2000 Normalised J/m, measured at 0°C using an Instrumented Falling Weight impact test (IFWT), and a flexural modulus of from 1000 to 3000 Mpa; and, either

b) a ribbed or corrugated outer pipe wall comprising a second polypropylene polymeric material having an MFR (230°C, 2.16 kg) of up to 5 g/10 min, the outer pipe wall having a flexural modulus of from 1000 to less

c) than 1700 Mpa, and an impact strength of from 5 to 50 kJ/m$^2$ measured at 0°C using an Izod impact test, or

d) a ribbed or corrugated further outer pipe wall comprising a second polypropylene polymeric matrix material comprising from 5 to 50% of a particulate filler, the polymeric matrix having an MFR (230°C, 2.16kg) of up to 5g/10min, and the outer pipe wall having a flexural modulus of from 1000 to 3000 Mpa, and an impact strength of from 5 to 50 kJ/m$^2$ measured at 0°C using an Izod impact test.

The jetting resistant and impact resistant plastics pipe of the invention can consist of inner and outer walls of polypropylene polymeric material, or it may be a multilayer pipe in which the pipe wall comprises two or more polypropylene layers combined with layers of other polymeric materials. Such other polymeric materials can include, for example, polyethylene, PVC, polycarbonate and ABS, together with various tie layers. In a multilayer pipe, the glass fibre filled polypropylene layer can be an inner, intermediate, or outer layer of the inner wall, but preferably it is the innermost layer in order that the erosion due to the water jetting can be minimised.

The first polypropylene polymeric matrix material of the inner pipe wall is preferably a polypropylene homopolymer, or a blend of homopolymers. Polypropylene polymeric materials containing less than about 10% by weight, preferably less than about 5% by weight, of one or more co-monomers may be included, but are not at present preferred. In general it has been found that the addition of a co-monomer can increase the impact strength of the polypropylene material but decreases jetting performance.

The second polypropylene polymeric material of the outer pipe wall is preferably a polypropylene copolymer, or a blend of copolymers. Polypropylene polymeric materials containing up to about 20% by weight, preferably from 1% to about 10% by weight, of one or more co-monomers can be included. Typical comonomers include, for example, other olefins, such as, ethylene. The polypropylene copolymer can be a random copolymer, block copolymer, graft copolymer, or a blend thereof. Very good results have been obtained using a polypropylene block co-polymer comprising about 10% of co-monomer.

Tie layers of compatibilising agents may be included between the various layers of polymeric materials as required.

A plastics pipe is defined as being jetting resistant in this specification if, under the conditions of WIS 04-35-01, a plaque of the material of the pipe wall can withstand for two minutes a water jet impact at a pressure of 273 bar (4000 psig) without penetration. It has been observed with the jetting test that, to a first approximation, the time to penetration is relatively independent of the thickness of the plaque, within the thickness range 2mm to 4mm. Plaques that pass the jetting test have relatively undamaged surfaces, whereas if, during the test, even a small erosion pit is formed on the surface, complete penetration rapidly follows. In the present specification, tests are carried out on plaques of various thicknesses from 2mm to 4mm and the effect of thickness are ignored in assessing pass or failure.

A plastics pipe is defined as being impact resistant in this specification if the pipe can withstand a weight being dropped onto it from a height of 1 m at 0°C without sustaining a fracture, using the test conditions of WIS 04-35-01. For plastics pipes of nominal internal diameter of 150 mm the weight is 7.5 kg, for plastics pipes of nominal internal diameter of 180 mm the weight is 9.0 kg, and for plastics pipes of nominal internal diameter of 225 mm and above the weight is 12.5 kg.

According to a further aspect of the present invention there is provided a jetting resistant and impact resistant plastics pipe having an inner pipe wall comprising a glass fibre filled semi-crystalline first polypropylene polymeric matrix material, and a ribbed or corrugated outer pipe wall comprising a second polypropylene polymeric material, the pipe having a jetting resistance of at least 273 bar (4000 psi) and an impact energy of at least 73.58 kJ (for plastic pipes of nominal internal diameter of 150 mm) at least 88.3 kJ (for plastics pipes of nominal internal diameter of 180 mm) and at least 122.63 kJ (for plastics pipes of nominal internal diameter of 225 mm and above) measured at 0°C using the standard method of WIS 04-35-01 clause 6.14.

The invention is applicable to ribbed or corrugated plastics pipes preferably having a smooth inner wall surface. Such pipes, and methods for their manufacture, are described in EP0820566, EP0543243, GB1483113, EP0142482, EP0352255, EP0419470, EP0451241, EP0291136, EP0239046, EP0359088, EP0368096, EP0385465 and US5324557. The entire disclosures of all the above patent specifications are incorporated herein by reference for all purposes. In accordance with one aspect of the invention, the smooth inner wall of the ribbed or corrugated pipe comprises at least one layer of glass fibre filled polypropylene polymeric material. Other plastics pipes that can be usefully employed in the invention include, for example, twin-walled pipes and pipes having at least one layer of foamed polymeric material, provided that the outer layer is ribbed or corrugated.

The first polypropylene polymeric matrix material of the inner wall preferably comprises a relatively high weight fraction of glass fibres, preferably from 15% to 35 % glass fibres by weight, more preferably from 20% to 30%, for example, about 25% glass fibres by weight. Discontinuous, relatively short, glass fibres of average length from about 500 µm to about 900 µm, for example about 700 µm, in length are preferred. Some glass fibres can be broken during processing, and for the avoidance of doubt, it is to be understood that the fibre lengths quoted herein are post-processing fibre lengths. It has been found that the ring stiffness and strength of the pipe is also affected by the post-processing length to diameter ratio (L:D) of the glass fibres, and preferably the average L:D of the glass fibres is from 10 to 90, more preferably from 20 to 60, for example, about 50.

In the jetting resistant and impact resistant plastics pipes of the invention the total thickness of the pipe wall can, for example, be up to 15mm, but for economic reasons the total wall thickness is preferably less than this, for example, in the range of from 0.5 mm to 6 mm, more preferably from 1 mm to 5mm, such as, for example, about 4 mm. The expression "total thickness" as applied to a ribbed or corrugated pipe having a smooth inner wall in this specification is the thickness of the pipe wall between the ribs or corrugations. The thickness of the layer of glass fibre filled first polypropylene polymeric matrix material is preferably at least 1 mm, more preferably from 1mm to 5mm, and most preferably from 1.5mm to 3.5mm. In general, the thickness of the layer of glass fibre filled first polypropylene polymeric matrix material increases with increasing diameter of the plastics pipe.

The plastics pipe of the invention can have any suitable diameter, although for many applications the pipe will have an outer diameter in excess of 90 mm, more particularly from 110 mm to 1000 mm. Preferably the height of the ribs or corrugations is from 5 to 100 mm, more preferably from 8 to 40 mm, and the pitch, that is, the distance between the peaks of adjacent ribs or corrugations is from 5 to 100 mm, more preferably from 10 to 50 mm.

Preferred first polypropylene polymeric matrix materials for use as the matrix of the inner wall of the pipe of the present invention include, for example, those having a degree of crystallinity of greater than 50 %, more preferably up to 60 % or more. Good results have been obtained using a polypropylene homopolymer having a degree of crystallinity of from 40 % to 60 %.

Preferred first polypropylene polymeric matrix materials for use as the matrix of the inner wall of the pipe of the present invention include, for example, those having an MFR (230°C, 2.16 kg) of from 0.01 to 4 g/10 min, more preferably from 0.05 to 3, for example, about 0.3 g/10 min.

Preferred filled polypropylene polymeric materials for use as the inner wall of the pipe preferably have an impact strength of from 900 to 1300 Normalised J/m, more preferably about 1100 Normalised J/m measured at 0°C using an Instrumented Falling Weight impact test (IFWT).

Preferably the filled polypropylene polymeric materials for use as the inner wall of the pipe have a flexural modulus of from 2500 to 3000 Mpa, more preferably about 2800 Mpa.

Preferably the first polypropylene polymeric material of the inner pipe wall comprises a nucleating agent. By "nucleating agent" in this specification is meant an additive that produces a higher degree of crystallisation of the first polypropylene polymer matrix material on processing than is achieved on processing the same polypropylene polymer material without the additive. In general, nucleating agents increase the temperature at which crystals begin to form. Preferred nucleating agents for use with the first polypropylene polymeric matrix material are nucleating colorants or pigments. Suitable nucleating agents may be inorganic or organic colorants or pigments, but in general organic pigments are preferred. Suitable organic colorants and pigments include polycyclic, azo (mono- and di-) and metal complex pigments, for example, anthraquinone, dioxazine, diketo pyrrolo pyrrole, isoindoline, isoindolinone, perinone, perylene, quinacridone, quinophthalone, thioindigo, bona lake, mono azo salt, benzimidazolone, diarylide, diazo and copper-phthalocyanine colorants and pigments. Blue colorants and pigments, for example, copper-phthalocyanine colorants and pigments such as Heliogen Blue K6911D (BASF) are particularly preferred. Suitable inorganic colorants and pigments include titanium dioxide and especially Co/Al/Cr oxides such as Sicopal Blue K6310 (BASF). Mixtures of more than one of the pigments may be used. The particle size of the colorant or pigment is preferably in the range of from 0.5 to 3.0 µm, more preferably from 0.6 to 1.2 µm. Preferred second polypropylene polymeric materials for use as the outer ribbed or corrugated wall of the pipe of the present invention include, for example, those having an MFR (230°C, 2.16 kg) of from 0.01 to 4 g/10 min, more preferably from 0.05 to 3 g/ 10 min, most preferably from 0.1 to 0.6 g/10 min, for example, about 0.3 g/10 min.

In a first embodiment of the invention, the outer pipe wall preferably has a flexural modulus of from 1200 to less than 1700 Mpa, for example, about 1500 Mpa, and preferably has an impact strength of from 10 to 40 kJ/m$^2$, for example, about 30 kJ/m$^2$, measured at 0°C using an Izod impact test. In this embodiment, the addition of filler to the second polypropylene polymeric material can be omitted.

In a second embodiment of the invention, filler is added to the second polypropylene polymeric matrix material.

The outer pipe wall comprising filled second polypropylene matrix material preferably has a flexural modulus of from 1200 to 1800 Mpa, for example, about 1500 Mpa, and preferably has an impact strength of from 10 to 40 kJ/m$^2$, for example, about 30kJ/m$^2$, measured at 0°C using an Izod impact test.

One or more particulate fillers can be added to the second polypropylene polymeric matrix material forming the outer wall of the pipe to improve the overall impact resistance of the pipe. Suitable fillers include, for example, calcium carbonate, silica and talc, or mixtures thereof. The filler or fillers are preferably added in an amount of from 10 to 50 % by weight, more preferably from 15 to 35% by weight, for example, about 25% by weight, as required. The particle size of the filler has been found to be significant, and preferably is in the range of from 0.5 to 5 μm, more preferably from 0.8 to 2.5 μm. Particularly good results have been obtained using calcium carbonate (1.4 μm average particle size) and silica (1.5 μm average particle size). Such fillers may not always be necessary, however, and surprisingly it has been found that the selection of a combination of a glass fibre filled polypropylene inner wall and an unfilled polypropylene ribbed or corrugated outer wall of appropriate impact strength can produce a pipe of unexpectedly high impact resistance.

The invention enables a jetting resistant, high impact strength pipe to be produced from relatively inexpensive polymeric materials, without the need to use a commercially unacceptable thick-walled pipe section.

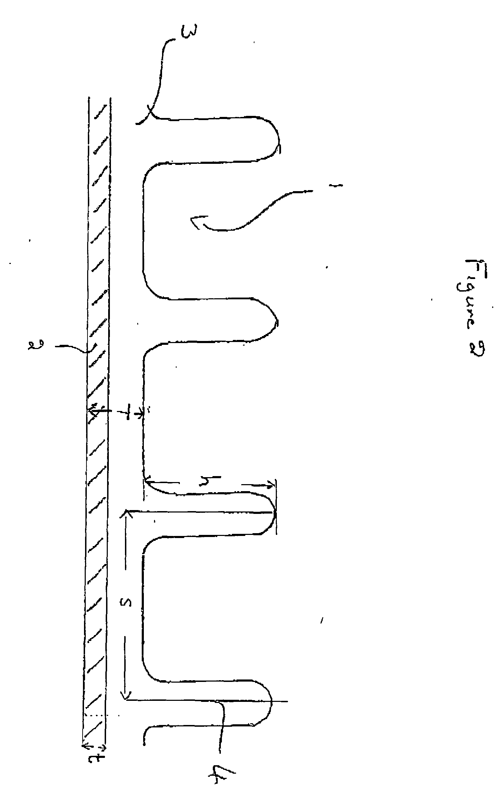

An embodiment of a multi-layer ribbed pipe in accordance with the invention is illustrated, by way of example only, in Figure 2 of the accompanying Drawings, which shows a longitudinal cross-section through the pipe wall.

Referring to Figure 2, the pipe, illustrated generally at 1, has a smooth inner wall 2 and a ribbed outer wall 3. The pipe has a total wall thickness T and an inner wall of thickness t. The ribbed outer wall 3 has integrally formed ribs 4 of height h and rib spacing s. The inner wall 2 is formed from a semi-crystalline polypropylene homopolymer matrix having a glass fibre content of 25 % by weight and the outer wall is formed from a polypropylene block co-polymer matrix having a calcium carbonate filler content of 25 % by weight.

The invention is particularly applicable to plastics pipes for use in sewer systems, although of course other fluid transfer systems, for example, domestic water and gas systems, are not excluded.

Embodiments of pipes in accordance with the invention are illustrated in the following Examples:

**EXAMPLE 1**

Several glass fibre filled semi-crystalline polypropylene polymeric materials of different MFR, containing a blue colourant as nucleating agent, were selected for trial as the inner wall of the pipe and moulded into plaques to simulate pipe wall sections. Plaques of 2 mm and 4mm thickness were prepared, and subjected to a series of tests to determine their mechanical properties. (IFWT refers to an Instrumented Falling Weight Puncture Test in accordance with ISO 6603.2, which measures total normalised energy in J/m). The degree of crystallinity of the matrix material of the moulded plaques ranged from 50 % to 60 %.

The plaques were also subjected to a jetting test. In the jetting test, five samples for each thickness were tested, and the results given as a single percentage, which was calculated using equation (1).

$$\% \text{ of required jetting performance} = \frac{\sum_{N=1}^{N}(P_{ja} \times t_{fa})}{N \times P_{jt} \times t_{ft}} \qquad (1)$$

Where:

P$_{ja}$ =    Actual Jetting Pressure
t$_{fa}$ =    Actual Time to Failure
N =    Number of samples tested
P$_{jt}$ =    Target Jetting Pressure (275bar/4000psi)
t$_{ft}$=    Target Time to Failure (120 seconds)

Table 2 sets out the results of these tests. PP6, PP7 and PP8 are comparison polypropylenes containing particulate glass spheres as filler.

TABLE 2 Assessment of filled polypropylenes for pipe inner wall

| Matrix | Glass | | Jetting Performance | | | | Mechanical Properties | | | | |
| | | | 275 Bar Tests | | | | MFR 2.16Kg 230°C | Transverse Flexural | | Charpy Impact 0°C | IFWT Total energy normalised |
| | | | 2mm | | 4mm | | | Mod | Strength | | |
| | Form | Wt % | Samples P/F | % of Required | Samples P/F | % of Required | g/10min. | mPa | Mpa | kJ/m² | J/m |
| PP1 | Fibres | 20 | 4P/1F | 85 | 4P/1F | 94 | 2.15 | 2630 | 71.49 | 23.0 | 681.04 |
| PP2 | Fibres | 25 | 5P | >100 | 5P | >100 | 1.95 | 2880 | 73.15 | 26.1 | 746.48 |
| PP3 | Fibres | 20 | 2P/3F | 52 | 3P/2F | 64 | 0.86 | 2690 | 67.77 | 25.2 | 731.09 |
| PP4 | Fibres | 25 | 1P/4F | 45 | 3P/2F | 70 | 0.57 | 2840 | 69.61 | 31.4 | 1037.19 |
| PP5 | Fibres | 30 | 4P/1F | 86 | 4P/1F | 99 | 0.46 | 2940 | 70.96 | 30.4 | 1487.10 |
| PP6 | S/Pa | 28.5 | 5F | 6 | 5F | 8 | 2.82 | 2240 | 49.24 | 12.6 | 406.82 |
| PP7 | S/Pa | 30 | 1P/4F | 25 | 5F | 7 | 2.66 | 2200 | 48.74 | 11.8 | 521.56 |
| PP8 | S/Pa | 23 | 5F | 9 | 5F | 6 | 3.23 | 2390 | 58.00 | 18.1 | 654.92 |
| PP9 | Fibres | 20 | 2P/3F | 53 | N/A | N/A | 2.53 | 2.66 | 81.49 | 34.1 | 888.25 |
| PP10 | Fibres | 20 | 1P/4F | 43 | N/A | N/A | N/A | | | | |

S/Pa = glass spheres

Certain selected polypropylene polymeric materials were also subjected to mechanical tests to determine their suitability for the outer wall of the pipe. The results of these tests are given in Table 3.

TABLE 3

| Assessment of polypropylenes for outer pipe wall | | | | | | | | |
| | Properties | | | | | | | |
| Material | MFR | Density | Filler % | Flexural | Tensile Str'gth | Izod Impact | | |
| | 230°C | | | Modulus | at yield | 23°C | 0°C | -20°C |
| | 2.16kg | g/cm³ | G/CC | MPa | MPa | kJ/m² | kJ/m² | kJ/m² |
| **PP11** | 0.3 | 0.9 | 0 | 1500 | - | >50 | 9 | 5 |
| **PP12** | 0.3 | 0.9 | 0 | 1700 | - | - | - | - |
| **PP13** | - | - | CC 25 | - | - | - | - | - |
| **PP14** | 0.3 | 0.9 | 0 | 1480 | 29 | 75 | 35 | 19 |
| **PP15** | 0.4 | 0.9 | 0 | 1050 | 26 | 60 | - | 6.5 |
| PP16 | 2.1 | 0.9 | 0 | 1750 | 35.5 | 45 | - | 4 |
| CC 25 = 1.4 micron calcium carbonate particles 25% by weight | | | | | | | | |

Using the results obtained on plaques set out in Tables 2 and 3, it was determined that the most promising glass fibre filled polymeric materials for the inner pipe wall were polypropylene homopolymers PP4 and PP5, and the most promising polymeric materials for the outer pipe wall were polypropylene block co-polymers PP11, PP12 and the calcium carbonate filled polypropylene block co-polymer PP13. Various combinations of these materials were made into composite pipes, with a corrugated outer wall and a smooth inner wall, subjected to a jetting test as set out above, and to an external impact resistance test as described in WIS 04-35-01. Finally, the best performing pipe was subjected to a 1000 hours internal pressure test in accordance with clause 6.8 of WIS 4-35-01. The results are set out in Table 4.

TABLE 4

| Sample | | Mechanical tests | | | Units |
| | | Jetting | External Impact | Pressure | |
| | | % of requirement | Meters | Hours | Requirement |
| | | 100 | 1 | 1000 | Wall thickness |
| Inner | Outer | 3mm | | | |
| PP4 | PP12 | > 100 | 0.83 | NA | |
| PP4 | PP13 | >100 | 1.03 | Pass | |
| PP4 | PP11 | > 100 | 1.02 | NA | |
| PP5 | PP12 | NA | 0.91 | NA | |

(1)   Actual wall thickness 2.6mm to 2.8mm

(2)   CC  =  1.4  micron  calcium  carbonate particles 25% by weight

The results demonstrate that the performance of the PP4/PP11 and PP4/PP13 multi-layer pipes exceeded the test requirements.

EXAMPLE 2

The polypropylene matrix material of Table 1 including 20% glass fibres achieved the required jetting test requirement but reached only 94% of the required impact strength. By the Instrumented Falling Weight Impact Test (IFWT) of ISO 6603.2 this material had a measured impact strength of 888.25 J/m. Accordingly 2mm thick plaques of further glass fibre filled polypropylene polymer materials were prepared containing 20% and 25% glass fibres and submitted to a jetting test in accordance with WIS 04-35-01 and an impact test according to ISO 6603.2 Instrumented Falling Weight Puncture Test (IFMT)(see Table 5). The chosen polypropylene materials were polypropylene co-polymers, all having higher impact strengths than the 20% glass fibre filled polypropylene material of Table 1.

TABLE 5

| Material Clasification | GF content | Jetting test | | Impact test | | Inner material impact results |
| | | P/F | % of requirement | P/F | % of requirement | IWFT |
| PP17 | 25 | Fail | 2.5 | - | - | 3376 |
| PP18 | 20 | Fail | 3.4 | - | - | 1396.73 |
| PP19 | 20 | Fail | 2.1 | - | - | 1121.56 |
| PP20 | 20 | Fail | 2.6 | - | - | 1119.86 |
| PP21 | 20 | Fail | 3.4 | - | - | 1749.56 |

The results of Table 5 show that substantially increasing the impact strength of the glass fibre filled polypropylene material (PP17) causes a dramatic fall-off in the jetting performance. Reducing the impact strength to an intermediate value (PP18 to PP21) does not lead to any significant improvement in jetting performance.
Two further samples of polypropylene homopolymer materials with 25% and 30% glass fibre content were prepared and made up into pipes of nominal diameter 225mm. The jetting and impact test results are shown in Table 6.

TABLE 6

| Material Clasification | GF content | Jetting test | | Impact test | | | Inner material impact results |
|---|---|---|---|---|---|---|---|
| | | P/F | % of requirement | P/F | % of requirement | | IWFT°C |
| PP4 | 25 | Pass | 100 | Pass | >100 | | 1037.19 |
| PP5 | 30 | Pass | 100 | Pass | 100 | | 1487.10 |

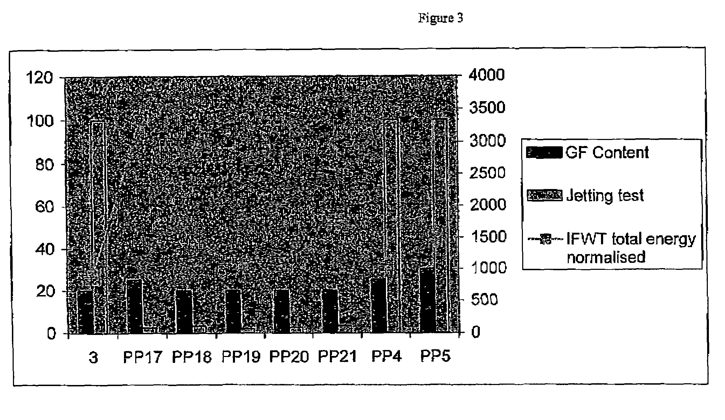

The results of Table 6 show that the use of polypropylene homopolymer matrix materials restores the jetting performance and meets the impact strength requirement. The results of Table 5 and Table 6 are also illustrated graphically in Figure 3 of the accompanying Drawings.

In summary, Example 2 demonstrates that increasing the impact strength of the glass fibre filled inner layer of the pipe wall using polypropylene co-polymers causes the jetting performance to deteriorate to below the required value. Using a polypropylene homopolymer matrix of lower impact strength and slightly increasing the glass fibre content can reverse this deterioration.

EXAMPLE 3

Two further pipes were manufactured by co-extrusion. The pipes had an inner layer of glass fibre filled polypropylene homopolymer matrix and an outer ribbed layer of polypropylene co-polymer. The results of impact tests on the pipes and flexural modulus measurements on the outer layer are given in Table 7

TABLE 7

| Materials Used | | | | | PP4 | PP4 |
|---|---|---|---|---|---|---|
| Inner | | | | | | |
| Outer | | | | | PP12 | PP14 |

| TESTS | WIS 04-35-01 Clause | Req't | Units | | | |
|---|---|---|---|---|---|---|
| Flexural Modulus of outer | | | Mpa | | 1700 | 1480 |
| Ex Impact DN 150 (7.5 Kg) | 6.14 | 1 | m | | 0.83 | 1.105 |
| STIS (Short Term Stiffness) | 6.15 | 8 | kN/m$^{-2}$ | | 14 | 10.28 |

Example 3 demonstrates that in order to meet the test requirements, the flexural modulus of an unfilled outer polypropylene layer needs to be less than 1700Mpa.

EXAMPLE 4

This example demonstrates the effect of adding particulate filler to the polypropylene matrix material of the outer pipe wall.

A series of multi-layer pipes having ribbed outer layers were extruded as described in Example 1. External impact and short-term stiffness measurements were carried out on the completed pipes. The results are shown in Table

8.

TABLE 8

| Materials Used | | PP4 | PP4 | PP4 | PP4 |
|---|---|---|---|---|---|
| Inner Wall | | PP12 | PP12 | PP14 | PP14 |
| Outer Wall | | | CaCO3 25W% | | CaCO3 25W% |
| Additives (outer wall) | | | | | |

| TESTS | WIS 04-35-01 Clause | Req't | Units | | | | |
|---|---|---|---|---|---|---|---|
| Ex Impact DN 150 (7.5 Kg) | 6.14 | 1 | m | 0.83 | 1.03 | - | - |
| STIS (Short Term Stiffness) | 6.15 | 8 | kN/m$^{-2}$ | 14 | - | 10.28 | 15.25 |

The results of Example 4 demonstrates that it is possible to use a polypropylene matrix material having a higher flexural modulus as the outer layer of the pipe, provided that a particulate impact strengthening filler is included in the outer layer.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

**Claims**

1. A jetting resistant and impact resistant plastics pipe comprising:

    a) an inner pipe wall comprising a glass fibre filled semi-crystalline first polypropylene matrix polymeric material comprising from 10 to 35 weight % glass fibres of average fibre length from 100 to 3000 $\mu$m, the first polypropylene polymeric material having an MFR (230°C, 2.16 kg) of up to 5 g/10 min, and the filled polymeric material having an impact strength of from 800 to 2000 normalised J/m measured at 0°C using an Instrumented Falling Weight impact test, and a flexural modulus of from 1000 to 3000 Mpa; and either

    b) a ribbed or corrugated outer pipe wall comprising a second polypropylene polymeric material having an MFR (230°C, 2.16 kg) of up to 5 g/10 min, the polymeric material having a flexural modulus of from 1000 to less than 1700 Mpa, and an impact strength of from 5 to 50 KJ/m$^2$ measured at 0°C using an Izod impact test, or

    c) a ribbed or corrugated outer pipe wall comprising a second polypropylene polymeric matrix material comprising from 5 to 50% of a particulate filler, the polymeric matrix material having an MFR (230°C, 2.16 Kg) of up to 5g/10min, and the filled polymeric material having a flexural modulus of from 1000 to 2000 Mpa, and an impact strength of from 5 to 50 kJ/m$^2$ measured at 0°C using an Izod impact test.

2. A plastics pipe according to claim 1, which consists of polypropylene polymeric material.

3. A plastics pipe according to claim 1 or 2, wherein the first polypropylene polymeric matrix material comprises a polypropylene homopolymer layer, optionally together with one or more layers of other polymeric materials.

4. A plastics pipe according to any one of the preceding claims, wherein the second polypropylene polymeric material is a propylene co-polymer.

5. A plastics pipe according to claim 4, wherein the propylene co-polymer is a random co-polymer or a block co-polymer.

6. A plastics pipe according to any one of the preceding claims, which is a ribbed or corrugated plastics pipe having a smooth inner surface.

7. A jetting resistant and impact resistant plastics pipe having an inner pipe wall comprising a glass fibre filled semi-crystalline first polypropylene polymeric matrix material, and a ribbed or corrugated outer pipe wall comprising a second polypropylene polymeric material, the pipe having a jetting resistance of at least 273 bar (4000 psi) and an impact energy of at least 73.58 kJ (for plastic pipes of nominal internal diameter of 150 mm) at least 88.3 kJ (for plastics pipes of nominal internal diameter of 180 mm) and at least 122.63 kJ (for plastics pipes of nominal internal diameter of 225 mm and above) measured at 0°C using the standard method of WIS 04-35-01.

8. A plastics pipe according to any one of the preceding claims, wherein the semi-crystalline first polypropylene material comprises an effective amount of a nucleating agent.

9. A plastics pipe according to any one of the preceding claims, wherein the glass fibre filled first polypropylene polymeric matrix material comprises from 20 to 30% by weight of glass fibres.

10. A plastics pipe according to any one of the preceding claims, wherein the average length of the glass fibres is from 500μm to 900μm, or
wherein the average length to diameter ratio of the glass fibres is from 10 to 90.

11. A plastics pipe according to any one of the preceding claims, wherein the total pipe wall thickness is from 0.5mm to 6mm.

12. A plastics pipe according to any one of the preceding claims, wherein the thickness of the layer of glass fibre filled polypropylene polymeric material in the pipe wall is from 1mm to 5mm.

13. A plastics pipe according to any one of the preceding claims, having an outer diameter of from 110 to 1000 mm.

14. A plastics pipe according to any one of the preceding claims wherein the first polypropylene polymeric matrix material has a degree of crystallinity of from 40 to 60%

15. A plastics pipe according to any one of the preceding claims, adapted for use in a sewer system.

16. A plastics pipe according to any one of the preceding claims, wherein the glass fibre filled first polypropylene polymeric matrix material has an MFR (230°C, 2.16 kg) of from 0.05 to 3 g/10 min.

17. A plastics pipe according to any one of the preceding claims, wherein the filled polypropylene polymeric material for use as the inner wall of the pipe has an impact strength of from 900 to 1300 Normalised J/m, measured at 0°C using an Instrumented Falling Weight impact test (IFWT), or
wherein the filled polypropylene polymeric material for use as the inner wall of the pipe has a flexural modulus of from 2500 to 3000 Mpa.

18. A plastics pipe according to claim 8, wherein the nucleating agent is a nucleating colorant or pigment.

19. A plastics pipe according to claim 18, wherein the nucleating agent is an inorganic colorant or pigment, or
wherein the nucleating agent is an organic colorant or pigment.

20. A plastics pipe according to claim 19, wherein the organic colorant or pigment is a polycyclic, azo (mono- and di-) or metal complex colorant or pigment.

21. A plastics pipe according to claim 20, wherein the organic colorant or pigment is an anthraquinone, dioxazine, diketo pyrrolo pyrrole, isoindoline, isoindolinone, perinone, perylene, quinacridone, quinophthalone, thioindigo, bona lake, mono azo salt, benzimidazolone, diarylide, diazo, or copper-phthalocyanine colorant or pigment.

22. A plastics pipe according to claim 19, wherein the inorganic colorant or pigment is titanium dioxide or a Co/Al/Cr oxide.

23. A plastics pipe according to any one of claims 18 to 22, wherein the colorant or pigment is a blue colorant or pigment.

24. A plastics pipe according to claim 23, wherein the colorant or pigment is a copper-phthalocyanine or a Co/Al/Cr oxide.

25. A plastics pipe according to claim 8, wherein the particle size of the nucleating agent is in the range of from 0.5 to 3.0 $\mu$m, or
wherein the particle size of the nucleating agent is in the range of from 0.6 to 1.2 $\mu$m.

26. A plastics pipe according to any one of the preceding claims, wherein the glass fibre filled polypropylene polymeric material of the inner wall contains one or more additives to improve the adhesion of the polymer to the glass fibres.

27. A plastics pipe according to any one of the preceding claims, wherein the second polypropylene polymeric material has an MFR (230°C, 2.16 kg) of from 0.05 to 3 g/10 min.

28. A plastics pipe according to any one of the preceding claims, wherein the filled polymeric material of the outer pipe wall has an impact strength of from 10 to 40 kJ/m$^2$ measured at 0°C using an Izod impact test.

29. A plastics pipe according to any one of the preceding claims, wherein the outer pipe wall comprises an unfilled polypropylene co-polymer.

30. A plastics pipe according to any one of the preceding claims, wherein the filled polymeric material of the outer pipe wall has a flexural modulus of from 1200 to 1800 Mpa and comprises from 10 to 50% by weight of particulate filler.

31. A plastics pipe according to claim 30, wherein the filler is calcium carbonate, silica, or talc.

32. A plastics pipe according to claim 30 or 31, wherein the particle size of the filler is in the range of from 0.5 to 5 $\mu$m, or wherein the particle size of the filler is in the range of from 0.8 to 2.5 $\mu$m.

33. A plastics pipe according to any one of claims 30 to 32, wherein the filler is calcium carbonate of about 1.4 $\mu$m average particle size.

34. A sewer system comprising a plastics pipe according to claim 1.

35. A jetting resistant plastics pipe having a pipe wall comprising a glass fibre filled semi-crystalline polypropylene polymeric material.

Figure 1

Figure 2

Figure 3